# EUROPEAN PATENT APPLICATION

(11) **EP 4 737 528 A1**
(43) Date of publication of application: **06.05.2026**
(21) Application number: 23943658.7
(22) Date of filing: 29.06.2023
(51) Int. Cl.: C09D 201/00, C09D 7/61

(54) **ACTIVE ENERGY RAY-CURABLE COATING COMPOSITION**

(71) Applicant: Nissan Motor Co., Ltd., Yokohama-shi, Kanagawa 221-0023 (JP)
(72) Inventor: YOSHIOKA, Youichi, Atsugi-shi, Kanagawa 243-0123 (JP); FUKUYAMA, Yasuhiro, Atsugi-shi, Kanagawa 243-0123 (JP); KOSEMURA, Tooru, Atsugi-shi, Kanagawa 243-0123 (JP)
(74) Representative: Hoefer & Partner Patentanwälte mbB
(86) International application number: PCT/JP2023/024176
(87) International publication number: WO 2025/004263

(57) **Abstract**

In order to reduce the light absorbed by a coated object and suppress a temperature rise of the coated object, the active energy ray-curable coating composition contains an active energy ray-curable resin and a light-reflecting agent in an amount capable of suppressing the temperature rise of the coated object. The light-reflecting agent is contained in such an amount that the amount of the temperature rise of the coated object is 1,945,000°C·lx or less, or the light-reflecting agent is contained in an amount of 29 to 75 weight percent.

## Description

### Technical Field

The present invention relates to an active energy ray-curable coating composition.

### Background Art

A known photocurable coating composition contains a photocurable resin, a photopolymerization initiator, and an extender pigment such as precipitated barium sulfate (Patent Document 1). The extender pigment is used in an amount ranging from 1 to 30 parts by weight per 100 parts by weight of the photocurable resin.

### Prior Art Documents

### Patent Documents

Patent Document 1: JP2005-246299A

### Summary of Invention

### Problems to be solved by Invention

When an automobile is left in the blazing sun in midsummer, the temperature inside the automobile may reach around 50°C, and it is therefore desirable for a coating film formed on the exterior panels or the like of the automobile body to reduce the amount of light absorbed by the exterior panels and suppress the temperature rise of the exterior panels. In this specification, such a function of the coating film is referred to as a "temperature-reducing effect." Unfortunately, testing of the above conventional photocurable coating compositions has revealed that they have almost no temperature-reducing effect.

A problem to be solved by the present invention is to provide an active energy ray-curable coating composition that can reduce the amount of light absorbed by a coated object and suppress the temperature rise of the coated object.

### Means for solving Problems

The present invention solves the above problem by including an active energy ray-curable resin and a light-reflecting agent in an amount capable of suppressing a temperature rise of a coated object.

### Effect of Invention

According to the present invention, it is possible to reduce the amount of light absorbed by a coated object and suppress the temperature rise of the coated object.

### Brief Description of Drawings

[FIG. 1] FIG. 1 is a cross-sectional view illustrating an example of a multilayer coating film using the active energy ray-curable coating composition according to the present invention.
[FIG.2A ] FIG. 2A is a side view illustrating a method for testing the temperature-reducing effect of a coating film using the active energy ray-curable coating composition according to the present invention.
[FIG. 2B] FIG. 2B is a plan view illustrating a method for testing the temperature-reducing effect of a coating film using the active energy ray-curable coating composition according to the present invention.
[FIG. 3] FIG. 3 is a graph illustrating the relationship between the content of a light-reflecting agent and the amount of temperature rise.

### Mode(s) for carrying out Invention

### «Active Energy Ray-Curable Coating Composition»

An active energy ray-curable coating composition according to an embodiment of the present invention is configured to include an active energy ray-curable resin, a light-reflecting agent in an amount capable of suppressing a temperature rise of the coated object, and a solvent, and, if necessary, a colorant as well as known coating additives (e.g., antifoaming agents such as silicone oil, fluorine-based surfactants, silicone-based surfactants, leveling agents such as acrylic copolymers, thickeners, viscosity reducers, etc.).

It is intended that the active energy rays in this specification include light such as ultraviolet rays and electron rays. The active energy ray-curable resin compositions of the present embodiment include ultraviolet-curable resin compositions and electron ray-curable resin compositions. The ultraviolet-curable resin compositions include ultraviolet radical-curable resin compositions, such as epoxy acrylate resins, urethane acrylate resins, thermosetting acrylic resins, and thermosetting polyester resins, and cation-curable resin compositions represented by ultraviolet-curable epoxy resins. The ultraviolet rays have a lower curing energy than that of electron rays, so the ultraviolet-curable resin compositions may be used in conjunction with photopolymerization initiators. In contrast, the electron ray-curable resin compositions can use the same materials as those of the above-described ultraviolet-curable resin compositions, and the polymerization initiator can be omitted because the electron rays have a high curing energy.

The active energy ray-curable resin of the present embodiment for use can be either a crystalline or amorphous resin. Note, however, that when the content of the light-reflecting agent is increased, it is preferred to use an amorphous resin. This is because the light-reflecting agent is believed to be mixed into the amorphous moiety. Examples of amorphous active energy ray-curable resins include acrylic resins represented by polymethyl methacrylate resin.

The light-reflecting agent of the present embodiment has a property of reflecting sunlight, including infrared rays, and, although not particularly limited to, preferably has a light reflectance of 99% or more. Examples of light-reflecting agents of the present embodiment include barium sulfate, titanium oxide, zirconium dioxide, aluminum oxide, magnesium oxide, aluminum nitride, boron nitride, silica, mica powder, and powdered glass. Among these, it is more preferred to use barium sulfate and/or titanium oxide as the light-reflecting agent in the present embodiment.

The particle diameter of the light-reflecting agent in the present embodiment is not particularly limited, but it is preferably greater than 0 and less than or equal to 10 µm. Setting the particle diameter of the light-reflecting agent to 10 µm or less can prevent the light-reflecting agent particles from being exposed to the surface of the coating film and falling off, which is particularly effective when the light-reflecting agent content is high.

The light-reflecting agent of the present embodiment is preferably contained in an appropriate amount so that it is dispersed in the coating film and prevents the sunlight incident on the coating film from passing through the coating film and being absorbed by the steel sheet, which is the coated object. In other words, it is preferred for the light-reflecting agent of the present embodiment to be contained in an amount that can suppress the temperature rise of the steel sheet, which is the coated object. Specific examples of amounts capable of suppressing the temperature rise of the coated object include an amount that results in a temperature rise of the coated object of 1,945,000°C·lx or less, preferably an amount that results in a temperature rise of 1,920,000°C·lx or less, more preferably an amount that results in a temperature rise of 1,750,000°C·lx or less, further preferably an amount that results in a temperature rise of 1,400,000°C·lx or less, and even more preferably an amount that results in a temperature rise of 1,280,000°C·lx or less. This is because if the temperature rise of the coated object exceeds 1,945,000°C·lx, the temperature rise of the coated object cannot be sufficiently suppressed. The lower limit of the temperature rise of the coated object is approximately 1,190,000°C·lx, due to the limit of the ratio of solid contents in the coating material, that is, due to the coating workability.

Alternatively, specific examples of amounts capable of suppressing the temperature rise of the coated object include a reflecting agent content of 29 to 75 weight percent, preferably 37 to 75 weight percent, more preferably 44 to 75 weight percent, further preferably 50 to 75 weight percent, and even more preferably 54 to 75 weight percent, relative to the total coating material weight. This is because a reflecting agent content of less than 29 weight percent cannot sufficiently suppress the temperature rise of the coated object. The upper limit of the reflecting agent content is 75 weight percent, due to the limit of the ratio of solid contents in the coating material, that is, due to the coating workability.

In the active energy ray-curable coating composition of the present embodiment, the ratio of solid contents including the active energy ray-curable resin and the light-reflecting agent is preferably 90 weight percent or less. This is because if the ratio of solid contents including the active energy ray-curable resin and the light-reflecting agent exceeds 90 weight percent, the coating workability using a coating tool such as an applicator will deteriorate.

### «Multilayer Coating Film»

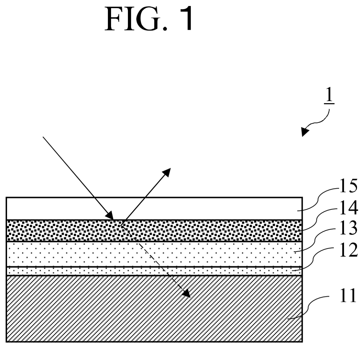

FIG. 1 is a cross-sectional view illustrating an example of a multilayer coating film 1 using the active energy ray-curable coating composition according to the present invention. The multilayer coating film 1 of the embodiment illustrated in the figure is composed of an electrodeposition coating film 12 formed on the surface of a steel sheet 11, a middle coating film 13 formed on the surface of the electrodeposition coating film, a top coating film 14 formed on the surface of the middle coating film 13, and a clear coating film 15 formed on the surface of the top coating film. An aluminum sheet may be used in place of the steel sheet 11.

The electrodeposition coating film 12 is formed using a thermosetting coating material whose base resin is an epoxy-base resin such as a polyamine resin to a film thickness of, but not limited to, 10 to 25 µm. The middle coating film 13 and the clear coating film 15 are each formed using a thermosetting coating material whose base resin is an acrylic resin, alkyd resin, polyester resin, or the like. The middle coating film 13 is formed to a film thickness of, but is not limited to, 15 to 30 µm, and the clear coating film 15 is formed to a film thickness of, but is not limited to, 15 to 30 µm.

In the multilayer coating film 1 of the present embodiment, the active energy ray-curable coating material according to the embodiment of the present invention described above is used for the top coating film 14, which is formed to a film thickness of, but is not limited to, 15 to 30 µm. Note, however, that the active energy ray-curable coating material according to the embodiment of the present invention can also be used for the electrodeposition coating film 12, the middle coating film 13, or the clear coating film 15 in the same manner as for the top coating film 14.

### «Actions and Effects of Embodiments»

As described above, the active energy ray-curable coating composition of the present embodiment contains an active energy ray-curable resin and a light-reflecting agent in an amount capable of suppressing a temperature rise of a coated object; therefore, when sunlight containing infrared rays is incident on the multilayer coating film 1 as illustrated in FIG. 1, the sunlight is reflected by the light-reflecting agent in the top coating film 14 composed of the active energy ray-curable coating composition of the present embodiment, and can be prevented from being absorbed by the steel sheet 11 as illustrated with the dashed line. This suppresses the temperature rise of the steel sheet 11, thus leading to the temperature-reducing effect inside the automobile.

Moreover, according to the active energy ray-curable coating composition of the present embodiment, the light-reflecting agent is contained in such an amount that an amount of the temperature rise of the coated object is 194,500°C·lx or less, which can specifically suppress the absorption of sunlight, including infrared rays, by the steel sheet 11.

Furthermore, according to the active energy ray-curable coating composition of the present embodiment, the light-reflecting agent is contained in an amount of 29 to 75 weight percent, which can specifically suppress the absorption of sunlight, including infrared rays, by the steel sheet 11.

In addition, according to the active energy ray-curable coating composition of the present embodiment, the active energy ray-curable resin is an amorphous resin, which can contain a large amount of the light-reflecting agent, further suppressing the absorption of sunlight, including infrared rays, by the steel sheet 11.

Moreover, according to the active energy ray-curable coating composition of the present embodiment, the light-reflecting agent is barium sulfate and/or titanium oxide, which more specifically suppresses the absorption of sunlight, including infrared rays, by the steel sheet 11.

Furthermore, according to the active energy ray-curable coating composition of the present embodiment, the light-reflecting agent has a light reflectance of 99% or more, which more specifically suppresses the absorption of sunlight, including infrared rays, by the steel sheet 11.

In addition, according to the active energy ray-curable coating composition of the present embodiment, the particle diameter of the light-reflecting agent is greater than 0 and less than 10 µm, which can prevent the light-reflecting agent particles from being exposed to the surface of the coating film and falling off. This is particularly effective when the light-reflecting agent content is high.

Moreover, according to the active energy ray-curable coating composition of the present embodiment, the ratio of solid contents including the active energy ray-curable resin and the light-reflecting agent is 90 weight percent or less, which can suppress the deterioration of the coating workability using a coating tool such as an applicator.

Furthermore, the active energy ray-curable coating composition of the present embodiment is applied to the outer panels of an automobile body, and it is therefore possible to suppress the temperature rise inside the automobile even when the automobile is left in the blazing sun in midsummer.

### [Examples]

The present invention will be described below by providing Examples that embody the active energy ray-curable coating composition of the present invention and Comparative Examples. Note, however, that the following specific values are those for Examples and Comparative Examples for understanding the present invention and are not intended to limit the scope of the present invention.

### «Example 1»

A coating material obtained by mixing 50 g of ultraviolet-curable coating material (available from DIC Corporation, ratio of solid contents 60%) with 21 g of barium sulfate (available from Sakai Chemical Industry Co., Ltd., average particle diameter 0.2 µm) as a light-reflecting agent was applied to the surface of a 0.15 m×0.07 m steel sheet using an applicator, and then irradiated with ultraviolet rays to prepare a coating film with a cured film thickness of 10 to 15 µm. The content of the light-reflecting agent in the ultraviolet-curable coating material used was 21/(50+21)×100 =29.6 weight percent.

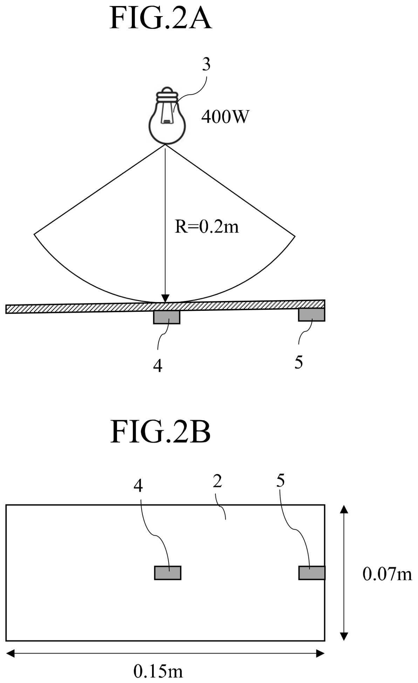

FIG. 2A is a side view illustrating a method for testing the temperature-reducing effect of a steel sheet sample 2 formed with a coating film, and FIG. 2B is a plan view of the same. The surface of the coating film of the steel sheet sample 2 formed with the coating film as described above was irradiated with light from a 40W incandescent lamp 3 from a position with a center distance R of 0.2 m. Thermocouples 4 and 5, which serve as temperature sensors, were fixed to the center and one end portion of the back surface of the steel sheet sample 2. The temperature of the steel sheet sample 2 before irradiation with light from the incandescent lamp 3 was 25°C. When 30 minutes passed after the start of irradiation with light from the incandescent lamp 3 and the temperatures detected by the thermocouples 4 and 5 stabilized, the temperature was measured and found to be 46.2°C at the center, as listed in Table 1.

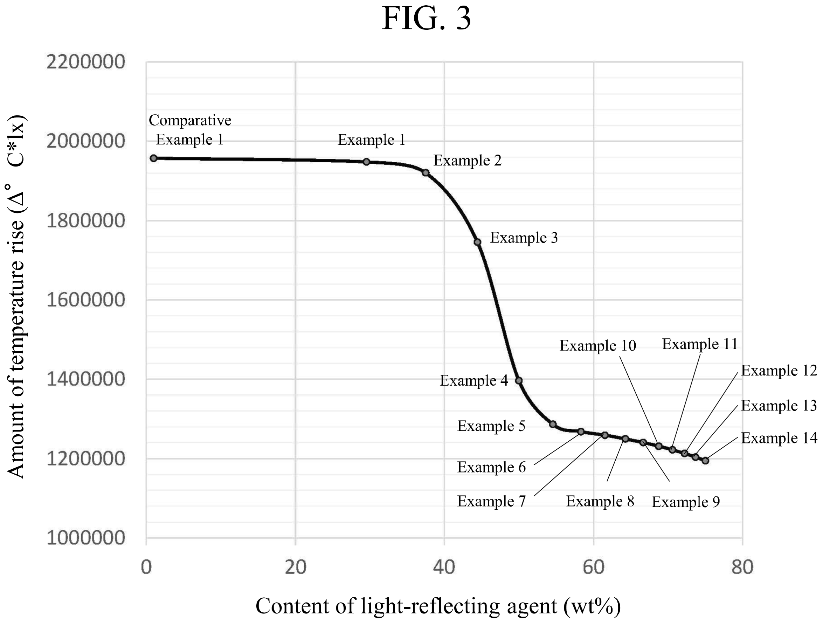

The 40W incandescent lamp 3 is said to have a luminous flux equivalent to 485 lumens (lm). The relationship between luminous flux Φ (lm) and illuminance E (lx) is E=Φ/area, so when the distance between the centers of the spherical incandescent lamp 3 and steel sheet sample 2 is R (m) and the area of the steel sheet sample 2 is M (m²), the illuminance per unit area E=485/(4πR²·M)=485 1m÷(4×π×(0.2 m)²×0.15 m×0.07 m)=91,893 lux (lx). As described above, when the steel sheet sample 2 of 25°C formed with the coating film on its surface was irradiated with light from the 40 W incandescent lamp 3, the central temperature measured by the thermocouple 4 rose to 46.2°C, and therefore the amount of temperature rise of the steel sheet sample 2 was (46.2°C-25°C)×91,893 lx=1,948,132°C·lx . The results are listed in Table 1 and illustrated in FIG. 3.

### «Examples 2 to 14»

Each steel sheet sample 2 was prepared under the same conditions as in Example 1 except that the weight of barium sulfate used as the light-reflecting agent mixed into 50 g of the ultraviolet-curable coating material in Example 1 was set to the weight listed in Table 1. The temperature rise of the steel sheet sample 2 was measured using the test method illustrated in FIGS. 2A and 2B. The results are listed in Table 1 and illustrated in FIG. 3.

### «Comparative Example 1»

The steel sheet sample 2 was prepared under the same conditions as in Example 1 except that the weight of barium sulfate used as the light-reflecting agent mixed into 50 g of the ultraviolet-curable coating material in Example 1 was set to 0.5 g. The temperature rise of the steel sheet sample 2 was measured using the test method illustrated in FIGS. 2A and 2B. The results are listed in Table 1 and illustrated in FIG. 3.

### «Comparative Example 2»

A coating material was prepared by setting the weight of barium sulfate to 160 g used as the light-reflecting agent mixed into 50 g of the ultraviolet-curable coating material in Example 1. An attempt was made to apply this coating material to the surface of a steel sheet with the same size as in Example 1 using an applicator, but the coating material got caught on the applicator, making it impossible to form a uniform film. Therefore, measurement of the temperature rise of the steel sheet sample 2 using the test method illustrated in FIGS. 2A and 2B was abandoned.

### [Table 1]

**Table 1**

| | Ultraviolet-curable coating material (g) | Light-reflecting agent/ Barium sulfate (g) | Ratio of solid contents (%) | Content of light-reflecting agent (wt%) | Amount of temperature change (deg.) | Amount of temperature rise (°C·lx) |
|---|---|---|---|---|---|---|
| Example 1 | 50 | 21 | 71.8 | 29.6 | 21.2 | 1948132 |
| Example 2 | 50 | 30 | 75.0 | 37.5 | 20.9 | 1920564 |
| Example 3 | 50 | 40 | 77.8 | 44.4 | 19.0 | 1745967 |
| Example 4 | 50 | 50 | 80.0 | 50.0 | 15.2 | 1396774 |
| Example 5 | 50 | 60 | 81.8 | 54.5 | 14.0 | 1286502 |
| Example 6 | 50 | 70 | 83.3 | 58.3 | 13.8 | 1268123 |
| Example 7 | 50 | 80 | 84.6 | 61.5 | 13.7 | 1258934 |
| Example 8 | 50 | 90 | 85.7 | 64.3 | 13.6 | 1249745 |
| Example 9 | 50 | 100 | 86.7 | 66.7 | 13.5 | 1240556 |
| Example 10 | 50 | 110 | 87.5 | 68.8 | 13.4 | 1231366 |
| Example 11 | 50 | 120 | 88.2 | 70.6 | 13.3 | 1222177 |
| Example 12 | 50 | 130 | 88.9 | 72.2 | 13.2 | 1212988 |
| Example 13 | 50 | 140 | 89.5 | 73.7 | 13.1 | 1203798 |
| Example 14 | 50 | 150 | 90.0 | 75.0 | 13.0 | 1194609 |
| Comparative Example 1 | 50 | 0.5 | 60.4 | 1.0 | 21.3 | 1957321 |
| Comparative Example 2 | 50 | 160 | 90.5 | 76.2 | - | - |

### «Examples 15 to 28 and Comparative Examples 3 and 4»

Each steel sheet sample 2 was prepared under the same conditions as in each of Examples 1 to 14 and Comparative Examples 1 and 2 except that the reflecting agent used in Examples 1 to 14 and Comparative Examples 1 and 2 was substituted with titanium oxide (available from Sakai Chemical Industry Co., Ltd., average particle diameter 0.2 to 0.3 µm). The temperature rise of the steel sheet sample 2 was measured using the test method illustrated in FIGS. 2A and 2B. The results are listed in Table 2.

### [Table 2]

**Table 2**

| | Ultraviolet-curable coating material (g) | Light-reflecting agent / Barium sulfate (g) | Ratio of solid contents (%) | Content of light-reflecting agent (wt%) | Amount of temperature change (deg.) |
|---|---|---|---|---|---|
| Example 15 | 50 | 21 | 71.8 | 29.6 | 16.0 |
| Example 16 | 50 | 40 | 77.8 | 44.4 | 16.2 |
| Example 17 | 50 | 60 | 81.8 | 54.5 | 16.0 |
| Comparative Example 3 | 50 | 0.5 | 60.4 | 1.0 | 22.2 |
| Comparative Example 4 | 50 | 160 | 90.5 | 76.2 | - |

### «Discussion»

In Examples 1 to 14, which used barium sulfate as the light-reflecting agent, and Examples 15 to 17, which used titanium oxide, the temperature rise suppression effect of the steel sheet sample 2 was confirmed when the content of reflecting agent relative to the total coating material was 29 to 75 weight percent, compared to Comparative Example 1 or 3. In particular, the temperature rise suppression effect of the steel sheet sample 2 was confirmed to be even greater when the content of reflecting agent relative to the total coating material was 37 to 75 weight percent, more preferably 44 to 75 weight percent, even more preferably 50 to 75 weight percent, and especially preferably 54 to 75 weight percent.

Likewise, in Examples 1 to 14 which used barium sulfate as the light-reflecting agent, the temperature rise suppression effect of the steel sheet sample 2 was confirmed when the amount of temperature rise of the steel sheet sample 2 was 1,945,000°C·lx or less, compared to Comparative Example 1. In particular, the temperature rise suppression effect of the steel sheet sample 2 was confirmed to be even greater when the amount of barium sulfate was that for 1,920,000°C·lx or less, more preferably 1,750,000°C·lx or less, even more preferably 1,400,000°C·lx or less, and especially preferably 1,280,000°C·lx or less.

Furthermore, from the results of Example 14 and Comparative Example 2, and Example 17 and Comparative Example 4, it was confirmed that when the ratio of solid contents including the ultraviolet-curable resin and light-reflecting agent was 90 weight percent or less, there were no problems with coating workability, but when the ratio of solid contents exceeded 90 weight percent, it was not possible to apply a uniform film.

### Description of Reference Numerals

- 1...: Multilayer coating film
11... Steel sheet
12... Electrodeposition coating film
13... Middle coating film
14... Top coating film
15... Clear coating film
- 2...: Steel sheet sample
- 3...: Incandescent lamp
- 4, 5...: Thermocouple

## Claims

1. An active energy ray-curable coating composition comprising:
an active energy ray-curable resin; and
a light-reflecting agent in an amount capable of suppressing a temperature rise of a coated object.

2. The active energy ray-curable coating composition according to claim 1, wherein the light-reflecting agent is contained in such an amount that an amount of the temperature rise of the coated object is 1,945,000°C·lx or less.

3. The active energy ray-curable coating composition according to claim 1 or 2, wherein the light-reflecting agent is contained in an amount of 29 to 75 weight percent.

4. The active energy ray-curable coating composition according to claim 3, wherein the active energy ray-curable resin is an amorphous resin.

5. The active energy ray-curable coating composition according to any one of claims 1 to 4, wherein the light-reflecting agent is barium sulfate and/or titanium oxide.

6. The active energy ray-curable coating composition according to any one of claims 1 to 5, wherein the light-reflecting agent has a light reflectance of 99% or more.

7. The active energy ray-curable coating composition according to any one of claims 1 to 6, wherein the light-reflecting agent has a particle diameter of greater than 0 and less than or equal to 10 µm.

8. The active energy ray-curable coating composition according to any one of claims 1 to 7, wherein a ratio of solid contents including the active energy ray-curable resin and the light-reflecting agent is 90 weight percent or less.

9. A method of coating an automobile body, comprising applying the active energy ray-curable coating composition according to any one of claims 1 to 8 to an outer panel of the automobile body.

10. The method of coating an automobile body according to claim 9, wherein the active energy ray-curable coating composition is applied to a film thickness of 10 to 500 µm and then cured by irradiating with active energy rays.
